(19) Europäisches Patentamt

European Patent Office

Office européen des brevets

(11) EP 1 134 924 A1

## (12) EUROPEAN PATENT APPLICATION
published in accordance with Art. 158(3) EPC

(43) Date of publication:
19.09.2001 Bulletin 2001/38

(21) Application number: 99974068.1

(22) Date of filing: 30.09.1999

(51) Int Cl.⁷: **H04J 13/00**, H04B 7/26

(86) International application number:
**PCT/JP99/05360**

(87) International publication number:
**WO 01/24429 (05.04.2001 Gazette 2001/14)**

(84) Designated Contracting States:
**AT BE CH CY DE DK ES FI FR GB GR IE IT LI LU MC NL PT SE**

(71) Applicant: **MITSUBISHI DENKI KABUSHIKI KAISHA**
**Tokyo 100-8310 (JP)**

(72) Inventor: **NARA, Hideaki,**
**Mitsubishi Denki Kabushiki Kaisha**
**Tokyo 100-8310 (JP)**

(74) Representative: **Sajda, Wolf E., Dipl.-Phys. et al**
**MEISSNER, BOLTE & PARTNER**
**Postfach 86 06 24**
**81633 München (DE)**

## (54) METHOD AND APPARATUS FOR PACKET TRANSMISSION

(57) A packet transmission method and device with which it is possible by means of a simple construction to suppress interference, increase communication system capacity and improve frequency bandwidth utilization efficiency in a code division multiple access wireless communication system. The device has a buffer for temporarily holding inputted packets and outputting them in time slots; detecting means for detecting the number of packets held in the buffer; control means for controlling the number of packets outputted by the buffer in each time slot on the basis of the detection results; and transmitting means for code division multiplexing and transmitting the packets outputted from the buffer.

FIG. 1

EP 1 134 924 A1

**Description**

BACKGROUND OF THE INVENTION

Field of the Invention

This invention relates to a packet transmission system for carrying out transmission of packets using wireless communication, and particularly to a packet transmission method and device using code division multiple access wireless communication.

Description of the Related Art

In code division multiple access (CDMA) wireless communication, multiple users share the same frequency band.

Specifically, multiple channels are multiplexed in the same frequency band by data to be transmitted in each of a number of different user communication channels being distributed using different pseudo-random noise code sequences. However, when the number of channels being multiplexed becomes large, interference between channels becomes a problem.

A related art packet exchange method disclosed in Japanese Unexamined Patent Publication No. H.10-23041 has the following steps [1] through [4]:

[1] Packets are broken up into short packet slots without overheads.
[2] The packet slots are compressed on the time axis. That is, the transmission speed of the packet slots is accelerated.
[3] On the basis of mathematical logic, a packet slot distribution pattern is determined.
[4] At times determined on the basis of the packet slot distribution pattern, the accelerated packet slots are transmitted.

With this kind of packet exchange method it is possible to reduce interference and increase the capacity of the communication system.

However, the compressing of the packet slots on the time axis (raising of the transmission rate) set forth in [2] increases the width of the frequency band. That is, in the reducing of interference and the increasing of communication system capacity, the width of the frequency band is increased, and consequently the communication system capacity per unit bandwidth does not increase. In other words, there is no improvement in bandwidth utilization efficiency.

And, with this packet exchange method, as set forth in [3] and [4], the transmission timing of accelerated packet slots is determined on the basis of special mathematical logic. However, for this mathematical logic to be applied, compression (acceleration) of the packet slots is necessary, and, as has already been explained, for this compression to be carried out, the frequency band has to be widened.

Also, this mathematical logic is for allocating transmission timing of compressed packet slots within the period of 1 pre-compression packet slot, and it is not possible to reduce interference with respect to a period exceeding 1 packet slot period.

Furthermore, dividing a packet into packet slots as set forth in [1] above necessitates a packet slot distribution pattern in both the transmitting device and the receiving device, and leads to increased complexity of the constructions of both of the devices.

SUMMARY OF THE INVENTION

It is therefore an object of the present invention to provide a packet transmission method and device with which it is possible to suppress interference in CDMA communication by means of a simple construction. And particularly, it is an object of the invention to provide a packet transmission method and device with which it is possible by means of a simple construction to suppress interference, increase communication system capacity, and improve frequency bandwidth utilization efficiency.

A packet transmission device provided by the invention has a buffer for temporarily holding inputted packets and outputting them in time slots; detecting means for detecting the number of packets held in the buffer; control means for controlling the number of packets outputted by the buffer in each time slot on the basis of results of this detection; and transmitting means for code division multiplexing and transmitting the packets outputted from the buffer.

Preferably, the multiplexed packets are transmitted with directivity.

Another packet transmission device provided by the invention has a buffer for temporarily holding inputted packets and then outputting them in time slots; detecting means for detecting the number of packets inputted before a predetermined time t and being held in the buffer and the number of packets to be inputted to the buffer in a predetermined period after the predetermined time t; control means for controlling the number of packets outputted by the buffer in each time slot on the basis of results of this detection; and transmitting means for code division multiplexing and transmitting the packets outputted from the buffer.

Another packet transmission device provided by the invention has a buffer for temporarily holding inputted packets and outputting them in time slots; detecting means for detecting the number of packets held in the buffer and the holding time for which each of these packets has been held in the buffer; control means for controlling the number of packets outputted by the buffer in each time slot on the basis of results of this detection; and transmitting means for code division multiplexing and transmitting the packets outputted from the buffer.

Another packet transmission device provided by the invention has a buffer made up of a plurality of FIFO buffers each for temporarily holding and then outputting inputted packets; detecting means for detecting for each FIFO buffer the number of packets held in that FIFO buffer; control means for controlling the packet output timing of each of the FIFO buffers on the basis of the respective detected number of packets; and transmitting means for code division multiplexing and transmitting the packets outputted from the FIFO buffers.

Another packet transmission device provided by the invention has a buffer for temporarily holding and then outputting inputted packets; detecting means for detecting the number of packets held in the buffer; control means for controlling the packet output of the buffer on the basis of detection results of the detecting means so that the number of packets outputted from the buffer is equalized over time; and transmitting means for code division multiplexing and transmitting the packets outputted from the buffer.

Also, in a packet transmission method provided by the invention, inputted packets are held in a buffer; the number of packets held in the buffer is detected; the number of packets outputted from the buffer in each of a succession of time slots is controlled on the basis of results of this detection; and the outputted packets are code division multiplexed and transmitted.

## BRIEF DESCRIPTION OF THE DRAWINGS

Fig. 1 is a view illustrating conceptually a packet transmission method of a first preferred embodiment of the invention;

Fig. 2 is a view illustrating an example of an ordinary cellular communication system;

Fig. 3 is a view illustrating an example of packets received by a base station from an exchange in the first preferred embodiment;

Fig. 4 is a view illustrating an example of a state of pre-processed packets;

Fig. 5 is a view illustrating an example of a packet transmission method in a base station in the first preferred embodiment;

Fig. 6 is a block diagram showing an example of the construction of a base station of a second preferred embodiment;

Fig. 7 is a flow chart showing an example of a specific algorithm of the packet transmission method shown in Fig. 5;

Fig. 8 is a block diagram showing the construction of a transmitting device for illustrating the algorithm shown in Fig. 7;

Fig. 9 is a view illustrating packet delays;

Fig. 10 is a flow chart showing an example of an algorithm according to a fourth preferred embodiment; and

Fig. 11 is a view illustrating the construction of a base station of a fifth preferred embodiment.

## DETAILED DESCRIPTION OF THE PREFERRED EMBODIMENTS

### First Preferred Embodiment

In a first preferred embodiment, a packet transmission method according to the invention will be applied to a cellular communication system (cellular system).

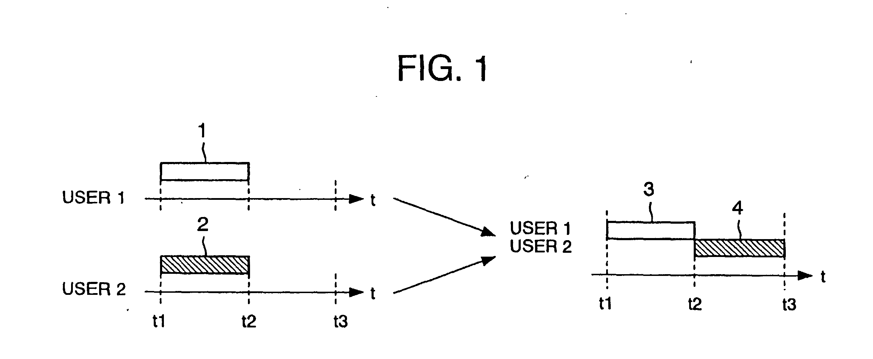

First, the packet transmission method of this first preferred embodiment will be explained conceptually. Fig. 1 illustrates conceptually the packet transmission method of this first preferred embodiment. In the figure, the reference numbers 1 and 2 denote two packets existing simultaneously (that is, in a period t1 to t2) in the same frequency band. Each horizontal axis $t$ is a time axis. Here, a 'packet' is a group of bits of information. A packet generally has an overhead, and this overhead includes a packet length, an origin of transmission, a destination, routing information, and information relating to data type.

In the packet transmission method of this first preferred embodiment, the transmission timing of the packets is controlled so that the packet 1 in Fig. 1 is transmitted with the timing of a packet 3 (that is, in the period t1 to t2) and the packet 2 is transmitted with the timing of a packet 4 (that is, in the period t2 to t3). However, the packets 3 and 4, like the packets 1 and 2, are transmitted in the same frequency band.

That is, by controlling the number of packets existing simultaneously and in the same band by controlling the transmission timing of each packet, interference in CDMA communication is suppressed. In particular, by equalizing over time the number of packets existing simultaneously and in the same band, interference is reduced and communication system capacity is increased.

Differently from the related art packet exchange method disclosed in Japanese Unexamined Patent Publication No. H.10-23041, the communication system capacity is increased without the packet frequency bandwith being widened. That is, the frequency band utilization efficiency improves.

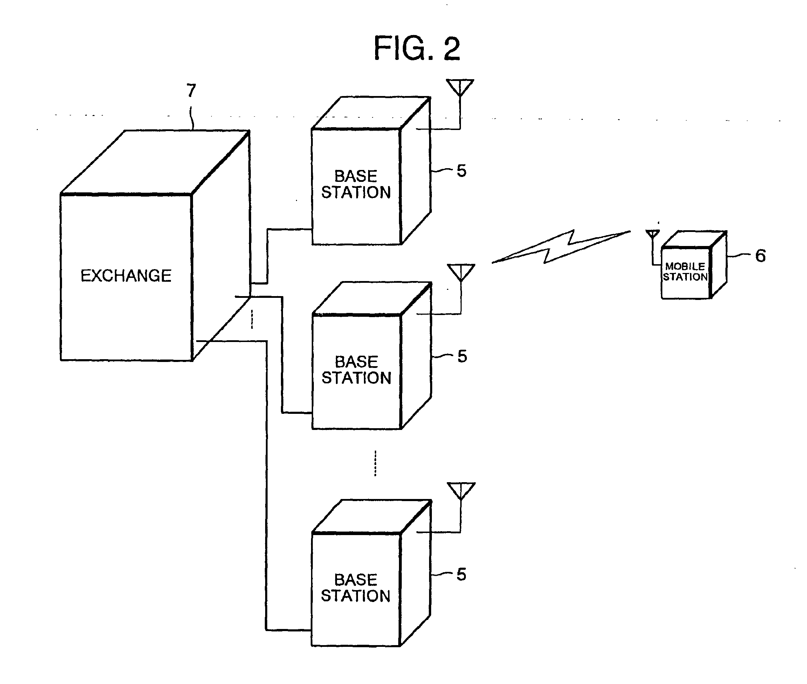

The example of a cellular communication system will now be described in detail. Fig. 2 is a view illustrating an example of an ordinary cellular communication system. In the figure, the reference number 5 denotes a base station, 6 a mobile station, and 7 an exchange. The mobile station 6 conducts wireless communication with the base stations 5. The exchange 7 performs relaying between the base stations 5 and ordinary subscriber telephones and the like.

In this first preferred embodiment, a packet exchange method according to the invention is applied to the base stations 5 shown in Fig. 2. More specifically, it will be explained how the base stations 5 transmit packets received from the exchange 7 to the mobile station 6 by CDMA wireless communication.

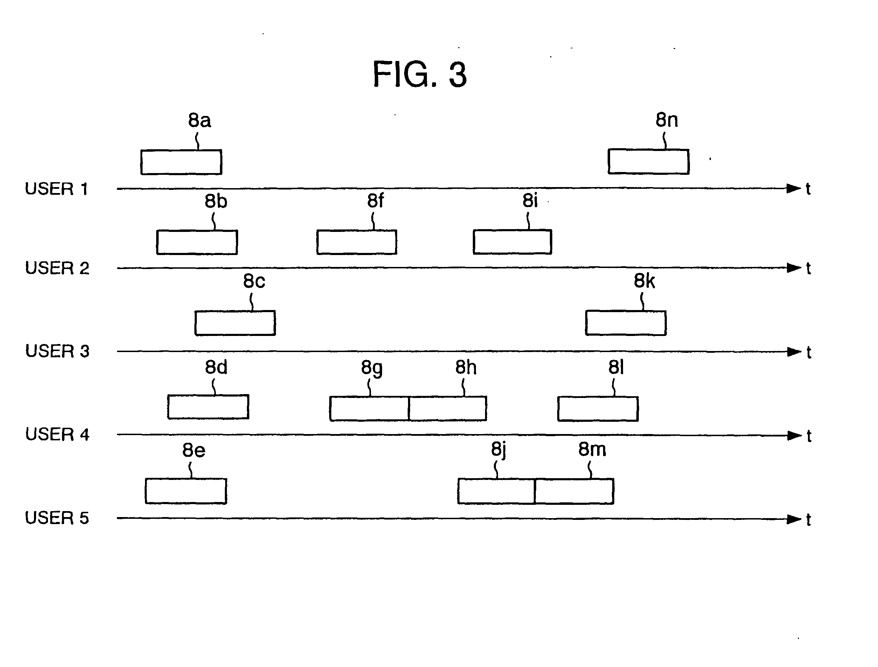

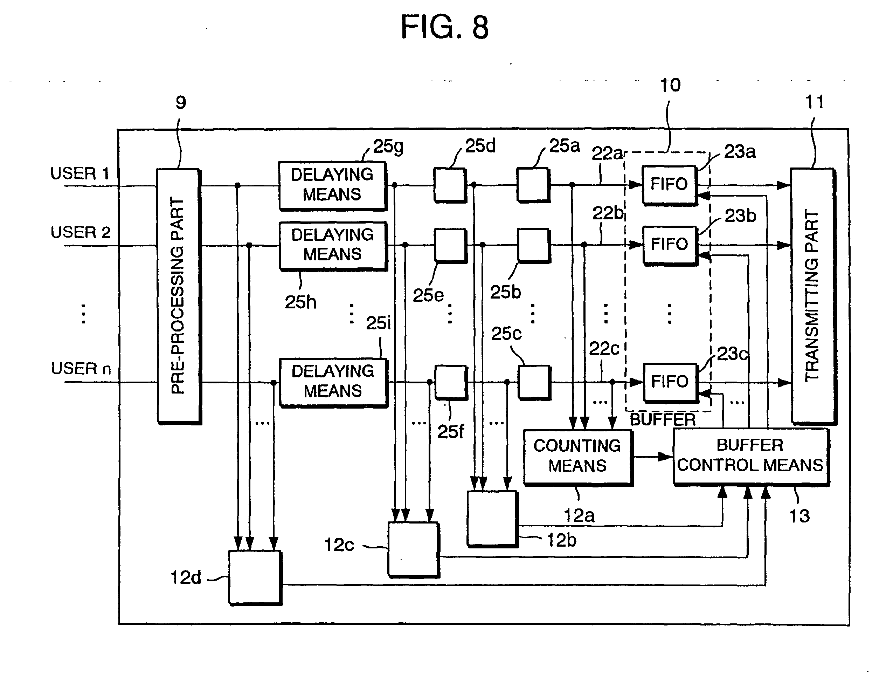

Fig. 3 is a view illustrating an example of packets received from the exchange 7 by the base stations 5 shown in Fig. 2. In Fig. 3, 8a through 8n are packets. The horizontal axes $t$ are time axes. The base stations 5 shown in Fig. 2 carry out various types of processing (hereinafter called pre-processing) such as parity checking and timing adjustment on the received packets shown in Fig. 3.

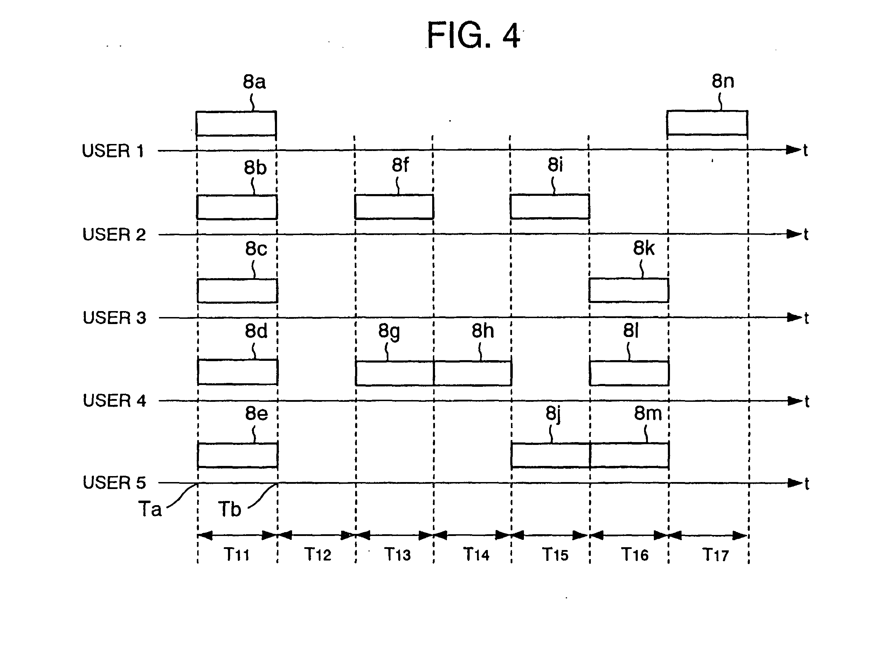

Fig. 4 is a view illustrating an example of the state of the packets after this pre-processing is completed. In this figure, parts the same as or equivalent to parts shown in Fig. 3 have been given the same reference numerals as in Fig. 3. T11 through T17 in Fig. 4 are time slots.

That is, 8a through 8e are packets of which pre-processing has been completed in the time slot T11. Similarly, pre-processing of packets 8f and 8g has been completed in the time slot T13; that of 8h in the time slot T14; that of 8i and 8j in the time slot T15; that of 8k through 8m in the time slot T16; and that of 8n in the time slot T17.

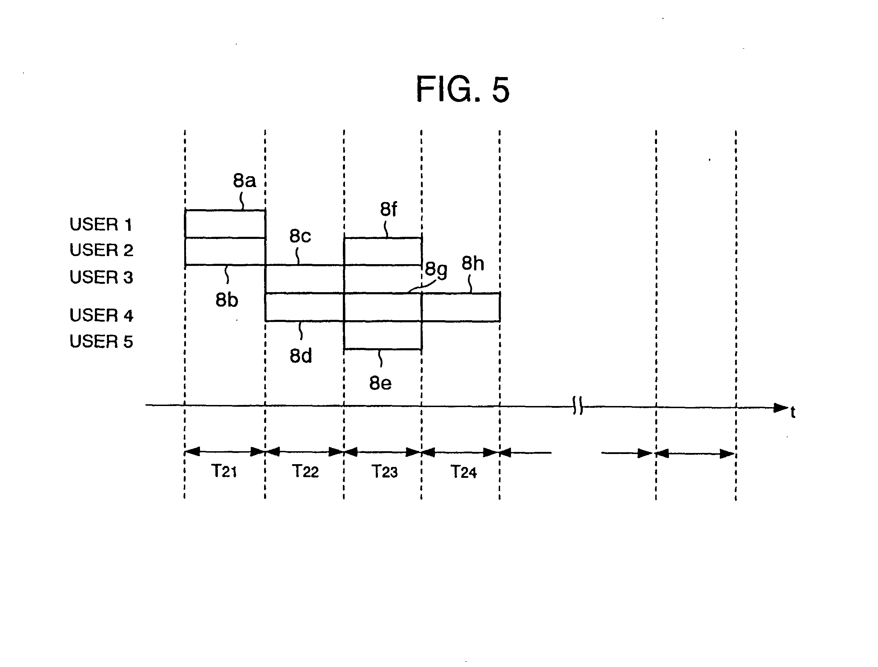

Normally, these packets are transmitted wirelessly as soon as their pre-processing finishes. For example, the five packets 8a through 8e are transmitted simultaneously through the same frequency band. In the base stations of this preferred embodiment, on the other hand, these packets of which pre-processing is finished are transmitted with the timing shown in Fig. 5. Fig. 5 is a view illustrating an example of a method by which the base stations of the this first preferred embodiment transmit the packets shown in Fig. 4. In this figure, parts the same as or equivalent to parts shown in Fig. 4 have been given the same reference numerals as in Fig. 4. And the time slots T21 through T24 correspond to the time slots T11 through T14 shown in Fig. 4. There is no objection to the time slots T21 through T24 and the time slots T11 through T14 being the same. This is a issue of the design of the circuit.

As shown in Fig. 5, the packets 8a and 8b are let out in the time slot T21, the packets 8c and 8d are let out in the next time slot T22, the packets 8e, 8f and 8g are let out in the time slot T23 and the packet 8h is let out in the time slot T24. That is, the transmission timing of some packets is delayed so that the number of packets transmitted simultaneously and in the same band is equalized over time. By this means it is possible to reduce interference and increase communication system capacity.

This equalizing over time of the number of outputted packets will now be explained. For example, it will be supposed that a series of packets inputted to the base stations 5 in a period t1 to t2 has been outputted (let out) in an period t3 to t4. And it will be supposed that at any time $t$ the number of packets having been inputted is expressed by the function f(t) and the number of packets having been outputted is expressed by the function g(t). To simplify the explanation, the number of packets inputted at times other than the period t1 to t2 will be taken to be zero. Variables Avef and Aveg shown in the following expressions (1) and (2) will now be defined.

$$Avef = \frac{\int_{t1}^{t2} f(t)dt}{t2 - t1} \quad \cdots (1)$$

$$Aveg = \frac{\int_{t3}^{t4} g(t)dt}{t4 - t3} \quad \cdots (2)$$

Then, the number of outputted packets is equalized over time when the following expression (3) holds.

$$\frac{\int_{t1}^{t2}(f(t) - Avef)^2 dt}{t2 - t1} > \frac{\int_{t3}^{t4}(g(t) - Aveg)^2 dt}{t4 - t3} \cdots (3)$$

That is, equalizing over time the number of outputted packets means reducing the fluctuation with time of the number of outputted packets.

As mentioned above, in the packet exchange method of this first preferred embodiment, the number of packets let out simultaneously and in the same band is controlled by a delay of each packet being controlled. By this means, it is possible to suppress interference in CDMA communication. In particular, by equalizing over time the number of packets let out simultaneously and in the same band, it is possible to reduce over-wireless interference and increase communication system capacity.

And, differently from in the packet transmission method disclosed in Japanese Unexamined Patent Publication No. H.10-23041, because the packets are transmitted without being divided up, there is no need for special information (information pertaining to the division of packets) such as a packet slot distribution pattern on the receiving side (for example in the mobile station 6 shown in Fig. 2), and the construction of the receiving side does not become complicated.

And, because the communication system capacity is increased without the frequency bandwidth being widened, the frequency band utilization efficiency improves.

Second Preferred Embodiment

In a second preferred embodiment, a specific construction of the packet transmission device shown in the first preferred embodiment will be described. Briefly, there is provided a buffer for holding temporarily and outputting inputted packets, and the number of packets outputted from this buffer simultaneously is controlled.

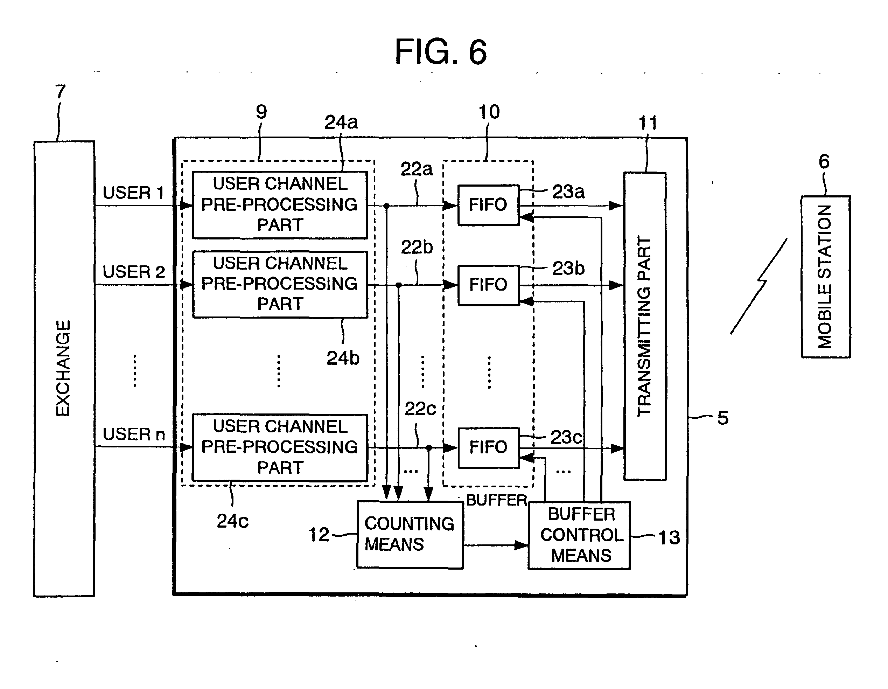

Fig. 6 is a construction block diagram of an example of a base station of this second preferred embodiment. In the figure, parts equivalent to parts in Fig. 2 have been given the same reference numerals. In Fig. 6, the reference numerals 22a through 22c denote packet transfer circuits provided for each of a number of user channels; 9 a pre-processing part for performing pre-processing on packets inputted from the exchange 7; 10 a buffer for delaying and outputting packets from the pre-processing part 9; and 11 a transmitting part for code division multiplexing and transmitting packets from the buffer 10. The pre-processing part 9 is made up of user channel pre-processing parts 24a through 24c for carrying out pre-processing, provided for each of the user channels.

The buffer 10 will now be described. The buffer 10 is made up of FIFO (First In - First Out) type buffers 23a through 23c provided for each of the user channels. FIFO is an input-output type wherein data is outputted in the order in which it was inputted.

By a FIFO type buffer (hereinafter, FIFO buffer) being provided for each user channel like this, the input order and the output order of packets belonging to the same user channel being reversed when the packets are delayed is avoided. And, nor does it happen that two or more packets pertaining to the same user are outputted simultaneously.

When the transmission order of packets belonging to the same user channel changes at the base station, CDMA communication cannot be carried out correctly. And also if two or more packets belonging to the same user channel are outputted simultaneously, CDMA communication cannot be carried out correctly.

Counting means 12 detects for each time slot whether or not there is a packet input to each of the FIFO buffers 23a through 23c. Buffer control means 13 controls the packet outputs of the FIFO buffers 23a through 23c on the basis of detection results from the counting means 12.

The buffer control means 13 will now be explained. As has already been mentioned, the counting means 12 detects for each time slot and for each of the FIFO buffers 23a through 23c whether or not there has been a packet input, and outputs this information to the buffer control means 13. And the buffer control means 13 controls the packet outputs of the FIFO buffers 23a through 23c. Accordingly, the buffer control means 13 can recognize the number of packets which have been inputted to the FIFO buffers 23a through 23c but have not yet been outputted (hereinafter, un-outputted packets).

On the basis of this number of un-outputted packets, the buffer control means 13 controls the delays of the packets. More specifically, the buffer control means 13 controls the packet outputs of the FIFO buffers 23a through 23c so that the number of packets outputted from the buffer 10 is equalized over time.

In this way, in the packet transmission device of this second preferred embodiment, because the packet output is controlled on the basis of the number of un-outputted packets existing in the buffer, with a simple construction, interference in CDMA communication can be suppressed. In particular, it is possible with a simple construction to realize a CDMA communication device which can averagize over time the number of outputted packets.

And, because two or more packets belonging to the same user are not outputted simultaneously, CDMA communication can be carried out correctly.

And also, because a FIFO type buffer is allocated to each of the user channels, CDMA communication can be carried out correctly and it is possible with a simple construction to obtain a packet transmission device capable of controlling the delay of each packet.

Third Preferred Embodiment

An example of an algorithm of a packet transmission method according to the invention will be presented using Figs. 4 through 8. In this third preferred embodiment, in the buffer 10 shown in Fig. 6, when the number of inputted packets is in a decreasing tendency, the output timing of some packets is delayed. And when the number of inputted packets is in an increasing tendency, packets are outputted with as little delay as possible. By this means, it is possible to reduce interference at the time of transmission.

For example, by detecting in advance the number of packets soon to be inputted to the buffer 10 shown in Fig. 6 and comparing that detected number of packets with the number of packets currently being held in the buffer 10, it is possible to determine the number of outputted packets optimal for reducing interference.

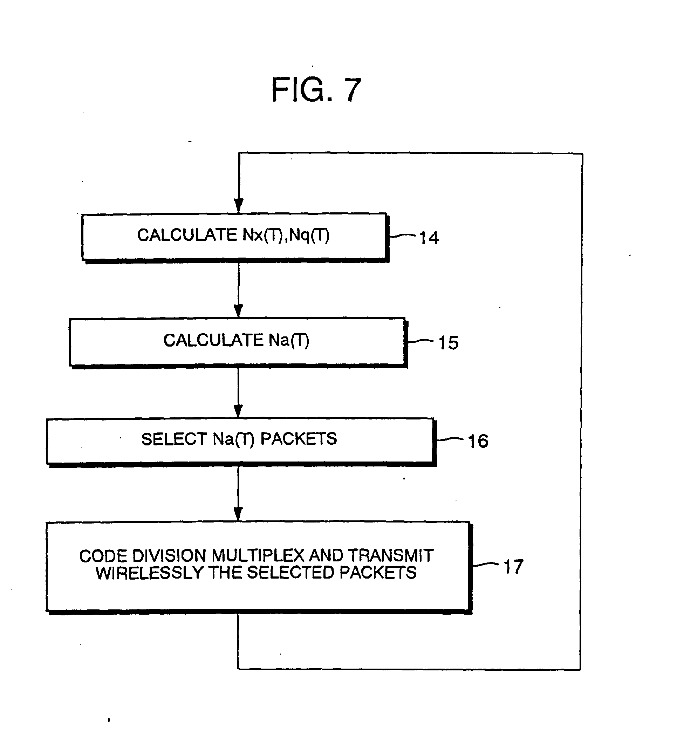

Fig. 7 is a flow chart showing an example of a specific algorithm of the packet transmission method shown in Fig. 5. That is, the packets shown in Fig. 4 can be converted as shown in Fig. 5 by means of the algorithm shown in Fig. 7. In Fig. 7, 14 through 17 show processing constituting an algorithm.

To explain the algorithm shown in Fig. 7, the following variables shown in [1] through [7] will be defined.

[1] $Nn(T)$ : the number of un-outputted packets which have been inputted to the buffer 10 from the pre-processing part 9 shown in Fig. 6 before the time slot $T$ but have not yet been outputted to the transmitting part 11 (initial value = 0).

[2] $N(T)$ : the number of packets inputted to the buffer 10 from the pre-processing part 9 in the time slot $T$.

[3] $Nx(T)$ : the number of un-outputted packets existing in the buffer 10 at the end time of the time slot $T$. That is, $Nx(T) = Nn(T)+N(T)$.

[4] $AveT$ : a freely set number larger than 2.

[5] $Np(T)$ : the sum of "the number of packets existing in the buffer 10 at the end time of the time slot $T$" and "the number of packets inputted to the buffer 10 in the period of the subsequent time slots $(T+1)$-$(T+(AveT-1))$". That is, $Np(T) = Nn(T)+N(T)+N(T+1)\cdots+N(T+AveT-1))$.

[6] $Nq(T)$ : the average value of $Np(T)$ per 1 time slot, that is, $[Np(T)/AveT]$. When $Nq(T)$ includes a value after the decimal point, then an integer obtained by rounding up, rounding down or rounding off.

[7] $Na(T)$ : the number of packets that shall be outputted by the buffer 10 in the time slot corresponding to the time slot T. Here, $Na(T) = \min(Nx(T),Nq(T))$.

When $x$ includes a value after the decimal point, $[x]$ is an integer obtained by rounding up, rounding down or rounding off. And $\min(a,b)$ indicates the smaller of $a$ and $b$. The time slot $(T+1)$ means the time slot following the time slot $T$.

Here, the variable $Nq(T)$ is a guide for determining the increase/decrease tendency of the number of inputted packets to the buffer 10. More specifically, it is the average value per 1 time slot of the number of packets (that is, $Np(T)$) that the buffer 10 should output in the AveT time slots period of from the time slot T to the time slot $(T+(AveT-1))$. When the number of un-outputted packets $Nx(T)$ is greater than this average value $Nq(T)$, it can be inferred that the number of inputted packets is in a decreasing tendency, and conversely when it is smaller it can be inferred that the number of inputted packets is in an increasing tendency.

Fig. 8 is a block diagram of the construction of a transmission device for illustrating the algorithm shown in Fig. 7. The transmission method shown in Fig. 7 can also be realized with the transmission device shown in Fig. 6, but here, to simplify the explanation, the method will be explained using the transmission device shown in Fig. 8. In Fig. 8, parts the same as parts shown in Fig. 6 have been given the same reference numerals as in Fig. 6.

In Fig. 8, delaying means 25a through 25i delay each inputted packet by 1 time slot and output them. Counting means 12a through 12d detect the numbers of packets inputted to the FIFO buffers 23a through 23c and to the delaying means 25a through 25i. The algorithm shown in Fig. 7 will be explained using the example of the time slot T11 shown in Fig. 4. It will be assumed that the variable AveT is 4. At the start point Ta of the time slot T11, the number of un-outputted packets existing in the buffer 10 shown in Fig. 8 is 0. That is, Nn(T11)=0.

And the number of packets detected by the counting means 12a, i.e. the number of packets newly inputted to the buffer 10 in the time slot T11, is 5. Thus N(T11)=5.

From the above, the number of un-outputted packets existing in the buffer 10 at the end point Tb of the time slot T11 is 5. That is, Nx(T11)=N(T11)+Nn(T11)=0+5=5 (the processing 14 shown in Fig. 7).

On the other hand, the number of packets detected by the counting means 12b, 12c and 12d in the time slot T11, i.e. the number of packets to be newly inputted to the buffer 10 in the time slots T12, T13 and T14 shown in Fig. 4, are respectively 0, 2 and 1. Thus, N(T12)=0, N(T13)=2 and N(T14)=1.

The sum of the number of packets already existing in the buffer 10 at the start point Ta of the time slot T11 and the number of packets newly inputted to the buffer 10 in the time slots T11 through T14 is 8. That is,

$$Np(T11)=Nn(T11)+N(T11)+N(T12)+N(T13)+N(T14)=0+5+0+2+1=8.$$

The value obtained by dividing this by the time width AveT of the time slots T11 through T14, i.e. the number of time slots 4, is 2. That is, Nq(T11)=Np(T11)/AveT=8/4=2 (the processing 14 shown in Fig. 7). If the obtained value Nq(T11) includes a value after the decimal point, it is integerized by rounding up, rounding down or rounding off.

Therefore, the number of packets that the buffer 10 shall output in the slot corresponding to the time slot T11 is the lower of the number of un-outputted packets Nx(T11) existing in the buffer 10 and the average value Nq(T11) of the number of packets inputted to the buffer 10, and is Na(T11)=2. In other words, Na(T11)=min(Nx(T11),Nq(T11)) =min(5,2)=2 (the processing 15 in Fig. 7).

The buffer control means 13 shown in Fig. 8 performs control so that this Na(T11) packets, i.e. 2 packets, are outputted from the buffer 10 (the processing 16 shown in Fig. 7). More specifically, the buffer 10 outputs the two packets 8a and 8b in the time slot corresponding to the time slot T11, i.e. the time slot T21 shown in Fig. 5. At this time, it is arbitrary which two of the five packets 8a through 8e are outputted. However, if the packets are outputted in the order in which they were inputted to the buffer 10 shown in Fig. 6, the transmission of packets is unlikely to become greatly delayed.

And, as already mentioned, it is impossible for two or more packets belonging to the same user channel to be transmitted simultaneously. Consequently, it may happen that the value of Na(T) obtained with the algorithm explained above exceeds the number of packets that realistically can be transmitted. In this case, the closest possible number of packets to Na(T) that can be transmitted should be outputted from the buffer 10. If Nq(T11) is a number larger than Nx(T11), i.e. Nq(T11)5, then all of the packets existing in the buffer 10 (that is, the packets 8a through 8e shown in Fig. 4) are outputted.

When Nq(T11)≥Nx(T11), i.e. the number of packets to be inputted to the buffer 10 hereafter is in an increasing tendency, the 5 un-outputted packets existing in the buffer 10 in the time slot T11 are all outputted. When on the other hand Nq(T11)<Nx(T11), in other words when the number of inputted packets is in a decreasing tendency, only the number of packets of the average value Nq(T11) are outputted. By the number of outputted packets at a time of decreasing tendency being made substantially the same as the average value Nq(T11), the effect of reducing interference is improved.

Thereafter, in time slots T12 through T17, the same processing is repeated. Because 2 packets of the 5 packets received by the time slot T11 are transmitted and 3 packets remain, the number of packets Nn(T12) existing in the buffer 10 at the start point Tb of the time slot T12 is 3.

Although here the time width AveT for equalizing was made four time slots, it is a freely determinable value. Generally, if AveT is made a large value, the interference-suppressing effect is large, but on the other hand larger delays tend to arise in packet transmission. This will be discussed in more detail below.

Fourth Preferred Embodiment

In a fourth preferred embodiment, the amount by which each packet in the buffer 10 shown in Fig. 6 may be delayed is limited. This will now be explained using the example of the algorithm shown in the third preferred embodiment.

As mentioned above, in equalizing over time the number of packets transmitted, the larger the time width pertaining to that equalization (i.e. AveT) is made, the greater the effect of suppressing interference becomes. At the same time, however, there is a possibility of large delays arising in packet transmission.

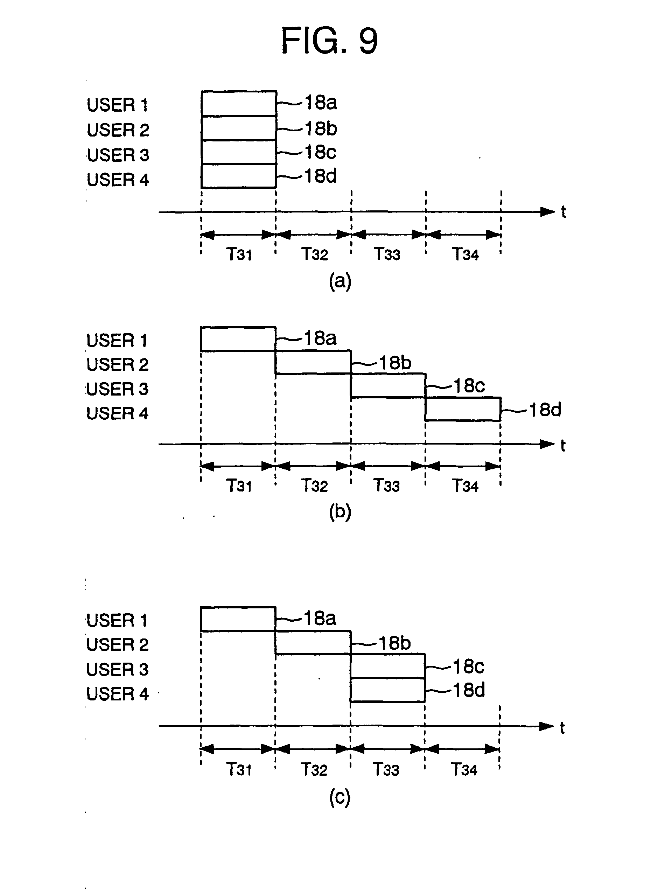

Figs. 9A through 9C are views illustrating delays of packets. In the figures, 18a through 18d are packets, and the horizontal axes are time axes. Fig. 9A illustrates an example of packets received by a base station 5 from the exchange 7 shown in Fig. 2. It will be supposed that, as shown in the figure, for example 4 packets (18a through 18d) are received in a time slot T31, and after that there is no reception of new packets. In this case, using the algorithm shown in the third preferred embodiment, the number of packets transmitted in each time slot is 1 (Fig. 9B).

In this fourth preferred embodiment, the delay of each packet is limited. Fig. 9C illustrates an example of a case wherein the maximum value of the delay of each packet is limited to 2 time slot periods. In the time slot T33, packets delayed by at least two time slots (i.e. packets 18c and 18d) are preferentially or forcibly let out.

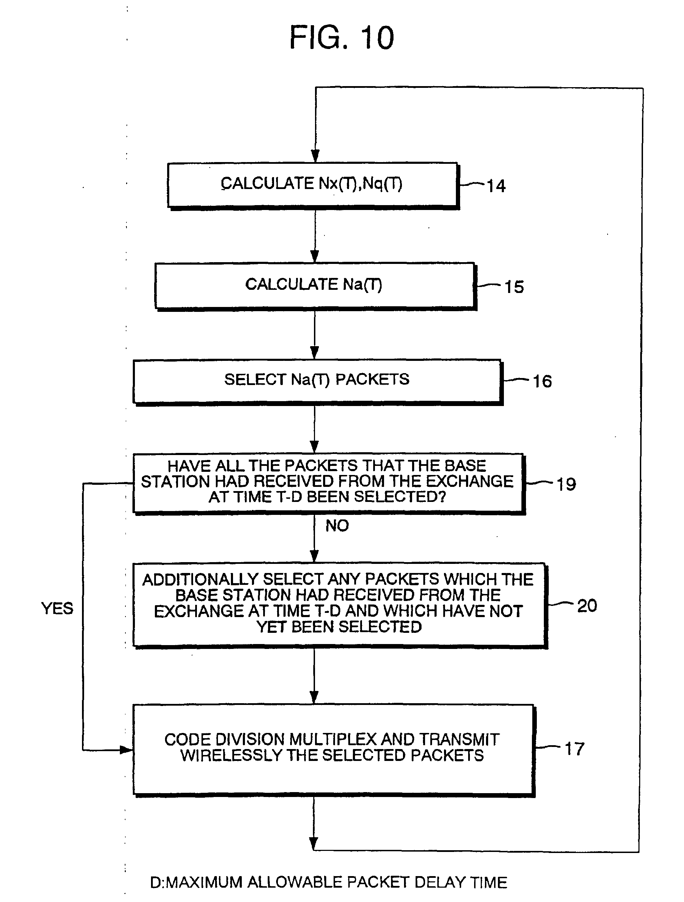

Fig. 10 is a flow chart showing an example of an algorithm of this fourth preferred embodiment. Parts the same as or equivalent to parts in Fig. 7 have been given the same reference numerals in Fig. 10 and will not be explained again here. Apart from the addition of the processing steps 19 and 20, the algorithm is the same as that shown in Fig. 7. In Fig. 10, D is a maximum allowable packet delay time and is a freely settable value. That is, when packets exist which have not yet been let out despite a pre-set maximum delay time D having been reached, these are let out immediately.

As described above, in the packet transmission method of this fourth preferred embodiment, by limiting the delay of each packet in controlling the number of packets let out simultaneously and in the same frequency band, a packet transmission method is realized with which interference in CDMA communication is suppressed and packet delays do not become large.

In particular, as a result of the delay of each packet being limited as the number of packets let out is equalized over time, it is possible to realize a packet transmission method with which the interference-suppressing effect is large and packet delays do not become large.

Fifth Preferred Embodiment

A base station of a cellular system can transmit radio waves in all directions (through 360°) around the base station. However, if this is treated as one zone, the frequency utilization efficiency will not be high. To overcome this, for example by using a plurality of directional antennae, the field is divided into three 120° parts, and each is treated as a different zone. These divided zones are called sectors.

In this fifth preferred embodiment, packet delays are controlled sector by sector. That is, the number of packets let out simultaneously and in the same band is controlled separately for each sector.

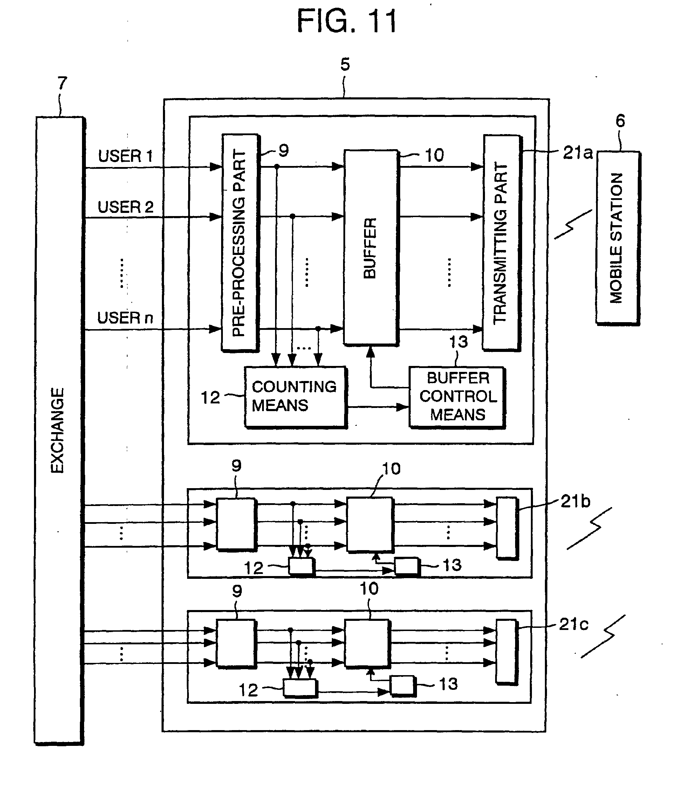

Fig. 11 illustrates an example of a construction of a base station of this fifth preferred embodiment. Parts the same as or equivalent to parts in Fig. 6 have been given the same reference numerals in Fig. 11 and will not be explained again here. The reference numerals 21a through 21c in Fig. 11 each denote a transmitting part for transmitting radio waves having directivity.

By controlling the number of packets let out simultaneously and in the same band sector by sector in this way, it is possible to further suppress interference in CDMA communication.

In particular, by performing control sector by sector so that the number of packets let out simultaneously and in the same band is equalized over time, it is possible to reduce over-wireless interference to the extreme and increase communication system capacity greatly.

Claims

1.   A packet transmission device, comprising:

a buffer for temporarily holding and then outputting in time slots inputted packets;
detecting means for detecting the number of packets held in the buffer;
control means for controlling the number of packets outputted by the buffer in each time slot on the basis of the number of packets detected by the detecting means; and
transmitting means for code division multiplexing and transmitting the packets outputted from the buffer.

2.   A packet transmission device according to claim 1, wherein the transmitting means code division multiplexes packets outputted simultaneously from the buffer and transmits these multiplexed packets with directivity.

3.   A packet transmission device according to claim 1, wherein the detecting means detects the number of packets inputted to the buffer before a predetermined time and held in the buffer and detects the number of packets to be inputted to the buffer in a predetermined period after the predetermined time, and the control means controls the number of packets outputted in each time slot on the basis of the detected number of packets inputted before the predetermined time and held in the buffer and the number of packets to be inputted in the predetermined period after the predetermined time.

4. A packet transmission device according to claim 1, wherein the detecting means detects the number of packets held in the buffer and the time for which each of these packets has been held in the buffer and on the basis of the detected number of packets and times held the control means controls the number of packets outputted by the buffer in each time slot while placing an upper limit on the time for which any packet is held in the buffer.

5. A packet transmission device according to claim 1, wherein the buffer is made up of a plurality of FIFO buffers each for temporarily holding and then outputting inputted packets; the detecting means detects for each FIFO buffer the number of packets held in the FIFO buffer; the control means controls the output timing of the packets outputted by each of the FIFO buffers on the basis of this detected number of packets; and the transmitting means code division multiplexes and transmits the packets outputted from the FIFO buffers.

6. A packet transmission device, comprising:

   a buffer for temporarily holding and then outputting inputted packets;
   detecting means for detecting the number of packets held in the buffer;
   control means for controlling the packet output of the buffer on the basis of detection results of the detecting means so that the number of packets outputted from the buffer is equalized over time; and
   transmitting means for code division multiplexing and transmitting the packets outputted from the buffer.

7. A packet transmission method, comprising the steps of:

   holding inputted packets in a buffer;
   detecting the number of packets held in the buffer;
   controlling the number of packets outputted from the buffer in each of a succession of time slots on the basis of results of the detecting; and
   code division multiplexing and transmitting the packets outputted from the buffer.

# FIG. 1

EP 1 134 924 A1

# FIG. 2

EP 1 134 924 A1

# FIG. 3

USER 1 — 8a ... 8n

USER 2 — 8b 8f 8i

USER 3 — 8c 8k

USER 4 — 8d 8g 8h 8l

USER 5 — 8e 8j 8m

EP 1 134 924 A1

# FIG. 4

EP 1 134 924 A1

# FIG. 5

FIG. 6

# FIG. 7

CALCULATE Nx(T),Nq(T) — 14

CALCULATE Na(T) — 15

SELECT Na(T) PACKETS — 16

CODE DIVISION MULTIPLEX AND TRANSMIT
WIRELESSLY THE SELECTED PACKETS — 17

# FIG. 8

EP 1 134 924 A1

# FIG. 9

USER 1 — 18a
USER 2 — 18b
USER 3 — 18c
USER 4 — 18d

t

T31  T32  T33  T34

(a)

USER 1 — 18a
USER 2 — 18b
USER 3 — 18c
USER 4 — 18d

t

T31  T32  T33  T34

(b)

USER 1 — 18a
USER 2 — 18b
USER 3 — 18c
USER 4 — 18d

t

T31  T32  T33  T34

(c)

# FIG. 10

CALCULATE Nx(T),Nq(T) — 14

CALCULATE Na(T) — 15

SELECT Na(T) PACKETS — 16

HAVE ALL THE PACKETS THAT THE BASE STATION HAD RECEIVED FROM THE EXCHANGE AT TIME T-D BEEN SELECTED? — 19

NO

ADDITIONALLY SELECT ANY PACKETS WHICH THE BASE STATION HAD RECEIVED FROM THE EXCHANGE AT TIME T-D AND WHICH HAVE NOT YET BEEN SELECTED — 20

YES

CODE DIVISION MULTIPLEX AND TRANSMIT WIRELESSLY THE SELECTED PACKETS — 17

D:MAXIMUM ALLOWABLE PACKET DELAY TIME

# FIG. 11

**EP 1 134 924 A1**

## INTERNATIONAL SEARCH REPORT

International application No.

PCT/JP99/05360

A. CLASSIFICATION OF SUBJECT MATTER
    Int.Cl⁷ H04J13/00, H04B7/26

According to International Patent Classification (IPC) or to both national classification and IPC

B. FIELDS SEARCHED

Minimum documentation searched (classification system followed by classification symbols)
    Int.Cl⁷ H04J13/00-13/06, H04B1/69-1/713, H04B7/26

Documentation searched other than minimum documentation to the extent that such documents are included in the fields searched
    Jitsuyo Shinan Koho         1922-1996    Toroku Jitsuyo Shinan Koho  1994-1999
    Kokai Jitsuyo Shinan Koho   1971-1999    Jitsuyo Shinan Toroku Koho  1996-1999

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 10-308722, A (Toshiba Corporation), 17 November, 1998 (17.11.98), | 1,2,5,7 |
| A | page 4, Column 5, line 1 to page 6, Column 9, line 16; Fig. 2   (Family: none) | 3,4,6 |
| A | WO, 95/35637, A2 (NOKIA TELECOMMUNICATIONS OY), 28 December, 1995 (28.12.95) & FI, 942961, A     & AU, 2739795, A1 & NO, 960657, A      & EP, 71793, A1 & CN, 1130972, A     & JP, 9-505197, T2 & US, 5754541, A | 1-7 |
| A | EP, 793368, A1 (Lucent Technologies Inc.), 03 September, 1997 (03.09.97) & CN, 1165446, A    & JP, 10-23041, A & US, 5751704, A | 1-7 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 17 December, 1999 (17.12.99) | 28 December, 1999 (28.12.99) |

| Name and mailing address of the ISA/<br>    Japanese Patent Office | Authorized officer |
|---|---|
| Facsimile No. | Telephone No. |

Form PCT/ISA/210 (second sheet) (July 1992)